Europäisches Patentamt

European Patent Office

Office européen des brevets

(19)

(11) Veröffentlichungsnummer: **0 078 806**
**B1**

(12)                          **EUROPÄISCHE PATENTSCHRIFT**

(45) Veröffentlichungstag der Patentschrift:
10.07.85

(51) Int. Cl.⁴: **B 60 Q 9/00,** B 60 K 41/20

(21) Anmeldenummer: 82900211.2

(22) Anmeldetag: 07.01.82

(86) Internationale Anmeldenummer:
**PCT/DE 82/00006**

(87) Internationale Veröffentlichungsnummer:
**WO 82/04019** (25.11.82 Gazette 82/28)

(54) **ANORDNUNG ZUM ERMITTELN DES HAFTBEIWERTES EINER FAHRBAHN.**

(30) Priorität: 14.05.81 DE 3119153

(43) Veröffentlichungstag der Anmeldung:
18.05.83 Patentblatt 83/20

(45) Bekanntmachung des Hinweises auf die Patenterteilung:
10.07.85 Patentblatt 85/28

(84) Benannte Vertragsstaaten:
**DE FR GB**

(56) Entgegenhaltungen:
**US - A - 3 431 776**

(73) Patentinhaber: **ROBERT BOSCH GMBH, Postfach 50,
D-7000 Stuttgart 1 (DE)**

(72) Erfinder: **LEIBER, Heinz, Theodor-Heuss-Strasse 34,
D-7141 Oberrlexingen (DE)**

## Beschreibung

### Stand der Technik

Die Erfindung geht aus von einer Anordnung nach der Gattung des Hauptanspruches.

Bei Fahrzeugen, insbesondere Straßenfahrzeugen, werden in zunehmendem Maß Vorrichtungen bekannt, die dem Fahrer den Straßenzustand anzeigen. Hierunter zählen sogenannte Eiswarnanzeigen in Verbindung mit Bordcomputern, die in einem Temperaturbereich, in dem eine Straßenvereisung erwartet werden kann, eine Warnanzeige ansteuern. Diese Eiswarnanzeigen haben jedoch den Nachteil, daß sie zwar den kritischen Außentemperaturbereich anzeigen, jedoch keine Aussage über die tatsächlich vorliegende Straßenoberfläche bzw. den für die Befahrbarkeit der Straße wichtigen Haftbeiwert der Fahrbahn liefern, da der Haftbeiwert sich nicht zwangsläufig und starr mit der Außentemperatur ändert.

Es ist weiterhin vorgeschlagen worden, sogenannte Aquaplaning-Einrichtungen vorzusehen, die eine Warnanzeige dann auslösen, wenn ein Rad durch Aquaplaning die Übertragungsfähigkeit zur Straßenoberfläche und damit an Umfangsgeschwindigkeit verliert. Untersuchungen mit verschiedenen Fahrzeugen und verschiedenen Reifen haben jedoch gezeigt, daß der für die Fahrstabilität des Fahrzeuges außerordentlich kritische Aquaplaning-Zustand in einem sehr schmalen Geschwindigkeitsbereich auftritt. Bezogen auf die Grenzgeschwindigkeit, bei der die Räder unter Aquaplaning-Bedingungen nicht mehr in der Lage sind, Reibungskräfte zu übertragen, tritt die genannte Umfangsgeschwindigkeits-Abnahme bei einer Geschwindigkeit auf, die nur wenige Prozent unterhalb der Grenzgeschwindigkeit liegt. Dadurch erfolgt die Aquaplaning-Warnung praktisch zu spät.

Andererseits ist es bekannt, Fahrzeuge, die über hilfskraftbetätigte Bremsen verfügen, mit sogenannten Antiblockiersystemen auszurüsten, d. h. Systemen, die aus Gebern Fahrzustandsgrößen ermitteln und aus diesen Fahrzustandsgrößen Steuergrößen für die Beeinflussung des Bremsdruckes ableiten. Derartige Antiblockiersysteme sind beispielsweise in »Bosch Technische Berichte« Band 7 (1980) Heft 2 oder SAE Technical Paper 790 458 beschrieben.

### Vorteile der Erfindung

Die erfindungsgemäße Anordnung mit den kennzeichnenden Merkmalen des Hauptanspruches hat demgegenüber den Vorteil, daß eine frühzeitige und sichere Erkennung eines kritischen Zustandes der Fahrbahn durch Ermittlung des Haftbeiwertes möglich ist. Hierzu können an sich bekannte Komponenten von Antiblockiersystemen verwendet werden, so daß die erfindungsgemäße Anordnung in besonders einfacher und vorteilhafter Weise in Fahrzeugen mit Antiblockiersystem vorgesehen werden kann.

Andererseits kann die erfindungsgemäße Vorrichtung auch in anderen Fahrzeugen vorgesehen werden, wobei auf Bauteile und Schaltungen zurückgegriffen werden kann, die aus der Technik der Antiblockiersysteme bekannt und dort ausgereift sind.

### Zeichnung

Ein Ausführungsbeispiel der Erfindung ist in der Zeichnung dargestellt und in der nachfolgenden Beschreibung näher erläutert. Es zeigt

Fig. 1 ein Blockschaltbild einer Ausführungsform einer erfindungsgemäßen Anordnung;

Fig. 2 und 3 Geschwindigkeits- bzw. Druckdiagramme über der Zeit zur Erläuterung der Wirkungsweise der erfindungsgemäßen Anordnung.

### Beschreibung des Ausführungsbeispiels

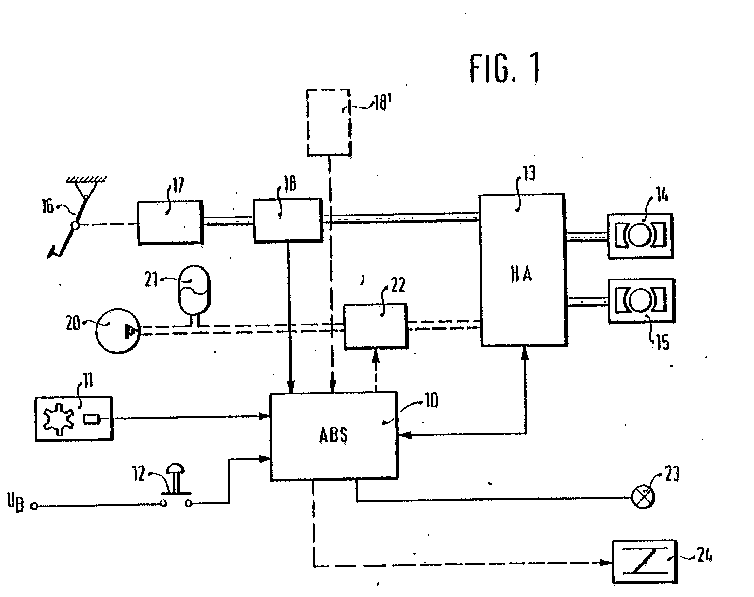

In Fig. 1 ist mit 10 ein Antiblockier-Steuergerät bezeichnet, das Eingangssignale von einem Drehzahlgeber 11 empfängt sowie über einen Testschalter 12 an eine Betriebsspannung $U_B$ anschließbar ist. Das Antiblockier-Steuergerät 10 steuert weiterhin ein Hydroaggregat 13, das auf Bremsen 14, 15 des Fahrzeuges einwirkt. Ein Bremspedal 16 steht mit einem Drucksteuergerät 17 in Verbindung, von dem eine hydraulische Verbindung über einen Druckgeber 18 zum Hydroaggregat 13 besteht. Der Druckgeber 18 oder ein Verzögerungsgeber 18' liefert ein Ausgangssignal an das Antiblockier-Steuergerät 10.

Gemäß einer weiteren Ausbildung der Erfindung ist eine Pumpe 20 vorgesehen, die mit einem Druckspeicher 21 zusammengeschaltet ist und über ein Stellglied 22, das vom Antiblockier-Steuergerät 10 angesteuert wird, mit dem Hydroaggregat 13 in Wirkverbindung steht.

Schließlich wird vom Antiblockier-Steuergerät 10 eine Anzeige 23 und in einer weiteren Ausführungsform der Erfindung eine Drosselklappe 24 angesteuert.

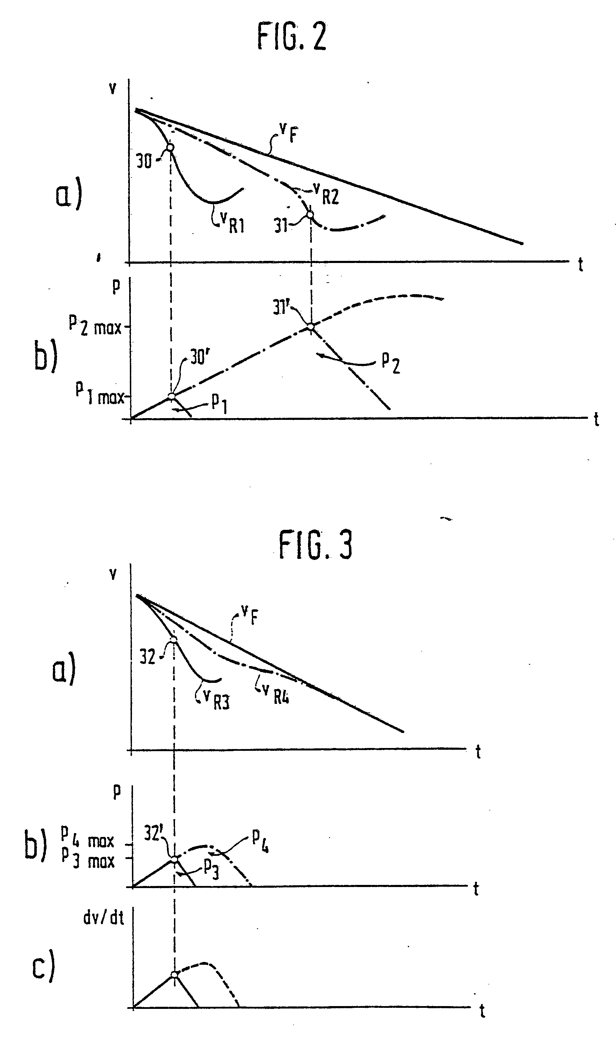

Die Wirkungsweise der in Fig. 1 dargestellten Anordnung soll im folgenden anhand der Diagramme aus Fig. 2 und 3 erläutert werden.

Das Antiblockier-Steuergerät 10 weist wenigstens die Funktionen bekannter Antiblockier-Steuergeräte auf, die erforderlich sind, um den Ist-Schlupfwert von Fahrzeugrädern anzuzeigen und zusätzlich bei Überschreiten einer vorgegebenen Schwelle die Anzeige 23 zu betätigen. Die Ermittlung des Haftbeiwertes der Fahrbahn erfolgt während eines sogenannten Testzyklus, der dadurch eingeleitet wird, daß einmal durch Betätigen des Testschalters 12 in der Rechenstufe des Antiblockiersystems 10 eine Test-Routine ausgelöst wird und andererseits in das Hydroaggregat 13 ein Testdruck eingespeist wird. Dieser Testdruck hat einen zeitlich ansteigenden Verlauf, wie dies in Fig. 2b mit $p_1$ und $p_2$ für zwei Betriebsfälle bezeichnet ist. Der Testdruck $p_1$, $p_2$

kann dabei entweder in einer ersten Ausführungsform der Erfindung direkt durch das Bremspedal 16 und ein Drucksteuergerät 17 vorgegeben werden, wobei der jeweils vorliegende Testdruck $p_1$, $p_2$ vom Druckgeber 18 erfaßt und als elektrisches Signal an das Antiblockier-Steuergerät 10 weitergegeben wird.

Der Testdruck $p_1$, $p_2$ kann jedoch in weiterer Ausbildung der Erfindung auch automatisch eingesteuert werden, und zwar durch das Betätigen des Testschalters 12. In diesem Fall wird aus der Pumpe 20 über das Stellglied 22 ein ansteigender Testdruck $p_1$, $p_2$ in das Hydroaggregat 13 eingesteuert.

Der ansteigende Testdruck $p_1$, $p_2$ in Fig. 2b hat einen Verlauf der Radgeschwindigkeit $v_{R1}$ bzw. $v_{R2}$ zur Folge, wie er in Fig. 2a im Vergleich zur Fahrzeuggeschwindigkeit $v_F$ dargestellt ist. Die in Fig. 2 durchgezogen dargestellten Verläufe $p_1$, $v_{R1}$ entsprechen dabei einer relativ schlüpfigen Fahrbahn, die strichpunktiert eingezeichneten Verläufe $p_2$ bzw. $v_{R2}$ einer griffigen Fahrbahn. Wie aus Fig. 2a ersichtlich, sinkt die Radgeschwindigkeit im ersten Fall schnell ab, so daß beispielsweise im Punkt 30 die vorgegebene Schlupfschwelle überschritten wird. Der Testdruck $p_1$ wird dann vom zugehörigen Maximalwert $p_{1max}$ im Punkt 30' wieder abgesenkt. Andererseits sieht man aus dem zweiten, strichpunktiert dargestellten Verlauf $v_{R2}$, daß in diesem Falle die Schlupfschwelle erst in einem wesentlich späteren Punkt nämlich im Punkt 31 erreicht wird. Entsprechend liegt der zugehörige maximale Testdruckwert $p_{2max}$ im Punkt 31' wesentlich höher und der Testdruck $p_2$ wird nach Erreichen dieses Maximalwertes abgesenkt.

Wie aus den Diagrammen für die beiden Betriebsfälle in Fig. 2 ohne weiteres ersichtlich ist, ist es zum Erkennen eines kritischen Haftbeiwertes nicht erforderlich, den Testdruck p sehr hoch ansteigen zu lassen, da bei einem kritischen Fahrbahnzustand entsprechend $v_{R1}$ bzw. $p_1$ der kritische Druck $p_{1max}$ relativ schnell erreicht ist. Ein weiteres Ansteigenlassen des Testdruckes ist deswegen nicht erforderlich, weil einmal Einbußen im Fahrkomfort erwartet werden müssen und andererseits bei Drücken oberhalb $p_{1max}$ bei geeigneter Auslegung dieses Grenzwertes davon ausgegangen werden kann, daß die Fahrbahn einen genügend hohen Haftbeiwert aufweist. Unter Zugrundelegung dieser Erkenntnis ist es möglich, einen automatisierten Testzyklus durchzuführen, wie er in Fig. 3 veranschaulicht ist. Dabei wird ein Testdruck $p_3$ bzw. $p_4$ eingesteuert, der den in Fig. 3b gezeichneten Verlauf hat und der Fahrzuständen entspricht, wie sie in Fig. 3a durch die Radgeschwindigkeit $v_{R3}$ bzw. $v_{R4}$ symbolisiert sind. Der durchgezogene Verlauf $p_3$ bzw. $v_{R3}$ entspricht dabei wiederum einer schlüpfigen Fahrbahn, der Verlauf $p_4$ bzw. $v_{R4}$ einer griffigen Fahrbahn. Bei Betätigen des Testschalters 12 wird ein Druck eingesteuert, der maximal den mit $p_4$ bezeichneten Verlauf hinsichtlich Zeitdauer und Amplitude aufweist. Das bedeutet, daß kein höherer Testdruck als der Wert

$p_{4max}$ eingesteuert wird. Im Falle einer schlüpfigen Fahrbahn wird sich dann der Verlauf $p_3$ bzw. $v_{R3}$ einstellen, bei dem bereits im Punkt 32 in Fig. 3a erkannt wurde, daß die zugehörige Schlupfschwelle überschritten wurde. Liegt hingegen ein hinreichend hoher Haftbeiwert vor, wird ein Testdruckverlauf entsprechend $p_4$ in Fig. 3b eingestellt, dem ein Radgeschwindigkeitsverlauf $v_{R4}$ in Fig. 3a zugeordnet ist. Wie bereits erwähnt, ist die zeitliche Länge und die Amplitude des Druckverlaufes $p_4$ dabei so eingestellt, daß einmal kritische Haftbeiwerte der Fahrbahn mit Sicherheit erkannt und außerdem die Einbuße an Fahrkomfort hinreichend niedrig gehalten wird.

Das entscheidende Kriterium für die Auslösung einer Anzeige, in Fig. 1 der Anzeige 23 ist die Zuordnung des vorgegebenen Schwellwertes des Ist-Schlupfes zum jeweiligen Testdruckwert. Wird dieser Schwellwert bereits bei niedrigen Testdrücken $p_{1max}$, $p_{3max}$ erreicht, ist dies ein Indiz für einen niedrigen Haftbeiwert der Fahrbahn während ein Erreichen des Schwellwertes bei hohen Testdrücken $p_{2max}$, $> p_{4max}$ ein Indiz für einen hohen Haftbeiwert der Fahrbahn ist. In entsprechender Weise kann auch das Erreichen einer hohen bzw. niedrigen Fahrzeugverzögerung (Signal vom Geber 18') als Kriterium herangezogen werden, da die Verzögerung näherungsweise proportional dem Druck ist (Fig. 3c).

Dementsprechend ist es natürlich auch möglich, das Verhältnis vom jeweiligen Testdruck bzw. Verzögerung zum Schwellwert des Ist-Schlupfwertes kontinuierlich oder nur bei Überschreiten eines Grenzwertes anzuzeigen. Im ersten Fall wäre der Vorteil gegeben, daß dem Fahrer auch eine Annäherung an einen kritischen Fahrbahnzustand angezeigt würde.

Es versteht sich von selbst, daß der oben im einzelnen beschriebene Testzyklus einmal durch Betätigen des Testschalters 12 eingeleitet werden kann, zum anderen jedoch auch in regelmäßiger Folge durch eine in Fig. 1 nicht dargestellte Zeitsteuerung, wodurch eine kontinuierliche Überwachung des Fahrbahnzustandes möglich wird.

Weiterhin ist in einer bevorzugten Ausführungsform der Erfindung vorgesehen, während des Ablaufes eines Testzyklus einen Eingriff in die Brennkraftmaschine des Fahrzeuges vorzunehmen, was in Fig. 1 durch die gestrichelte Verbindung zur Drosselklappe 24 angedeutet ist, wobei sich von selbst versteht, daß der Eingriff in die Brennkraftmaschine selbstverständlich auch über die Zündung, die Einspritzanlage und dgl. erfolgen kann.

Dabei ist es besonders zweckmäßig, den Testdruck nur auf die nicht angetriebenen Räder auszuüben und das Motordrehmoment während des Wirksamwerdens des Testdruckes anzuheben.

Darüber hinaus wird in einer bevorzugten Ausgestaltung der Erfindung die Zeitdauer des Testdruck-Anstieges einstellbar gemacht, um die Rückwirkung auf den Fahrer, insbesondere den sich am Fahrzeug einstellenden Ruck, klein halten zu können. Bei einer Auswertung des Verzögerungssignales kann hierdurch weiterhin der Einfluß der Trägheit des Fahrzeuges vermindert werden.

## Patentansprüche

1. Anordnung zum Ermitteln des Haftbeiwertes einer Fahrbahn für Fahrzeuge mit hilfskraftbetätigten Bremsen (14, 15) und einem von einem Antiblockier-Steuergerät (10) angesteuerten Aggregat (13) zur Betätigung der Bremsen (14, 15), wobei in dem Antiblockier-Steuergerät (10) ein Ist-Schlupfwert gebildet wird, dadurch gekennzeichnet, daß den Bremsen (14, 15) ein ansteigender Testdruck ($p_1$, $p_2$, $p_3$, $p_4$) zugeführt und bei Erreichen eines vorbestimmten Ist-Schlupfwertes unterhalb eines vorgegebenen Testdruckwertes oder Verzögerungswertes eine Anzeige (23) betätigt wird.

2. Anordnung nach Anspruch 1, dadurch gekennzeichnet, daß der Testdruck ($p_1$, $p_2$) vom Bremspedal (16) vorgegeben wird.

3. Anordnung nach Anspruch 1, dadurch gekennzeichnet, daß der Testdruck ($p_3$, $p_4$) mit sägezahnartigen Zeitverlauf vom Antiblockier-Steuergerät (10) nach Betätigen eines Testschalters (12) oder in vorgegebener zeitlicher Folge vorgegeben wird.

4. Anordnung nach einem der vorhergehenden Ansprüche, dadurch gekennzeichnet, daß der Testdruck ($p_1$, $p_2$, $p_3$, $p_4$) nur auf die nicht angetriebenen Räder ausgeübt und das Motordrehmoment durch Beeinflussung der Brennstoffzufuhr, der Zündung oder dgl. während des Wirksamwerdens des Testdruckes ($p_1$, $p_2$, $p_3$, $p_4$) erhöht wird.

5. Anordnung nach einem der vorhergehenden Ansprüche, dadurch gekennzeichnet, daß die Zeitdauer des Testdruck-Anstieges einstellbar ist.

## Claims

1. Arrangement for determination of the coefficient of friction of a carriageway for vehicles with powerassisted brakes (14, 15) and a unit (13) activated by an antiblock control device (10) for actuation of the brakes (14, 15), an actual slip value being formed in the antiblock control device (10), characterised in that a rising test pressure ($p_1$, $p_2$, $p_3$, $p_4$) is fed to the brakes (14, 15) and, upon reaching a predetermined actual slip value below a preassigned test pressure value or delay value, a display (23) is actuated.

2. Arrangement according to claim 1, characterised in that the test pressure ($p_1$, $p_2$) is preassigned by the brake pedal (16).

3. Arrangement according to claim 1, characterised in that the test pressure ($p_3$, $p_4$) with sawtooth-like time profile, is preassigned by the antiblock control device (10) after actuation of a test switch (12) or in preassigned time sequence.

4. Arrangement according to one of the preceding claims, characterised in that the test pressure ($p_1$, $p_2$, $p_3$, $p_4$) is only exerted on the non-driven wheels and the engine torque os increased by influencing the fuel supply, the ignition or the like while the test pressure ($p_1$, $p_2$, $p_3$, $p_4$) is taking effect.

5. Arrangement according to one of the preceding claims, characterised in that the time period of the test pressure rise is adjustable.

## Revendications

1. Dispositif pour déterminer le coefficient d'adhérence d'une chaussée, destiné à des véhicules avec des freins (14, 15) actionnés par force auxiliaire et une unité (13) pilotée par un appareil de commande d'antiblocage (10) pour actionner les freins (14, 15), une valeur réelle de glissement étant formée dans l'appareil de commande d'antiblocage (10), caractérisé en ce qu'une pression de contrôle croissante ($p_1$, $p_2$, $p_3$, $p_4$) est appliquée aux freins (14, 15) et un indicateur (23) est actionné lorsqu'une valeur réelle de glissement préfixée est atteinte au-dessous d'une pression de contrôle ou d'une décélération donnée.

2. Dispositif selon la revendication 1, caractérisé en ce que la pression de contrôle ($p_1$, $p_2$) est préfixée par la pédale de frein (16).

3. Dispositif selon la revendication 1, caractérisé en ce que la pression de contrôle ($p_3$, $p_4$), présentant une allure dans le temps en dents de scie, est fournie par l'appareil de commande d'antiblocage (10) après manoeuvre d'un interrupteur de contrôle (12) ou par intermittence suivant une succession dans le temps préfixée.

4. Dispositif selon une des revendications précédentes, caractérisé en ce que la pression de contrôle ($p_1$, $p_2$, $p_3$, $p_4$) est exercée seulement sur les roues non commandées et que le couple moteur est augmenté pendant l'action de la pression de contrôle ($p_1$, $p_2$, $p_3$, $p_4$) par une intervention sur l'arrivée de carburant, l'allumage ou un dispositif analogue.

5. Dispositif selon une des revendications précédentes, caractérisé en ce que la durée de l'élévation de la pression de contrôle est réglable.

FIG. 1

0 078 806

## FIG. 2

a)

b)

## FIG. 3

a)

b)

c)

7